# EUROPEAN PATENT SPECIFICATION

(11) **EP 0 820 902 B1**
(45) Date of publication and mention of the grant of the patent: **12.12.2001**
(21) Application number: 97202084.6
(22) Date of filing: 04.07.1997
(51) Int. Cl.: B60R 9/10

(54) **Clamping device for a cycle**
Klemmvorrichtung für ein Fahrrad
Dispositif de serrage pour bicyclette

(30) Priority: 23.07.1996 NL 1003659
(43) Date of publication of application: 28.01.1998
(73) Proprietor: Felua-groep, 7300 AP Apeldoorn (NL)
(72) Inventor: Monteny, Jacob Albert, 7325 RL Apeldoorn (NL)
(74) Representative: Dokter, Hendrik Daniel

(56) References cited:
- FR-A- 2 409 173
- FR-A- 2 411 109
- FR-A- 2 527 149

## Description

The invention relates to a clamping device for a cycle comprising a vertically placeable post which is provided with clamping means for clamping a crank of a cycle.

This clamping device is intended for instance for use in a cycle parking area, on the roof construction of an automobile or on a removable cycle carrier which can be fixed to the tow hook of an automobile.

Such a clamping device is known from the European patent application publication EP-A-0 666 197. The clamping device known from this publication comprises a post for fixing to a central beam of a cycle carrier, on which post is mounted an axially symmetrical clamp, the clamping parts of which take a clothes peg-like form, wherein a broad functional end and a narrowing tail end are always mutually connected for securing two cycles by clamping a crank thereof.

The known clamping device is applied in combination with U-shaped receiving channels for the wheels of a cycle in a manner such that the weight of a cycle presses on these receiving channels and movements of this cycle in its longitudinal direction are prevented by an inclining position of the receiving channels, while movements of the cycle in transverse direction are blocked by the clamping parts round the crank. The clamping parts of the known clamping device are in principle only suitable for clamping cranks which lie at the same angle (for traditional types of cycle a right angle) to the crank axle. A clamping device for clamping a crank lying at a right angle to a crank axle is in principle not suitable, or in any case less suitable, for clamping a crank which extends slightly outward from the crank axle to the pedal, this being the case in particular types of sport and touring cycles.

It is an object of the invention to provide a clamping device for a cycle such that the weight of a cycle clamped therewith is supported substantially by the post.

It is also an object to provide a clamping device which is suitable for clamping any type of cycle irrespective of the form of the crank of this cycle.

It is a further object to provide a clamping device which is simple to operate and with which clamping can be performed in rapid manner and the use of which does not result in damage to a clamped cycle, particularly to the crank or the lacquered frame parts thereof.

These and other objectives are achieved with a clamping device of the type stated in the preamble, of which clamping device the clamping means according to the invention comprise a support body for allowing a crank axle housing of a cycle to rest thereon and for allowing a crank of this cycle to support thereagainst, the support body being tiltable relative to the post on a shaft extending transversely of the longitudinal direction of the post.

With the support body is achieved that the weight of a cycle resting thereon with its crank axle housing is supported substantially by the post. The clamping device according to the invention exhibits the advantage over the prior art device, in that the crank of the relevant cycle supports against the support body, which thus contributes in large measure to the stability of a clamped cycle. Moreover, the option of tilting the support body optimizes connection thereof to the relevant crank of the cycle. The tilting shaft is for instance formed by a solid rod or is defined for instance by the connecting line between points on which the support body is rotatably suspended.

An embodiment of the clamping device according to the invention is provided with locking means for locking a tiltable support body against tilting.

Such locking means are applied for instance after an optimal connection of a crank to the support body has been effected to enhance the stability of a cycle clamped with its crank in the clamping device.

In a clamping device the clamping means according to the invention preferably comprise coupling means for releasable coupling of the crank of a cycle to the support body, which coupling means are more preferably tiltable relative to the post on a shaft extending transversely of the longitudinal direction of the post.

The option of tilting of the coupling means contributes to an optimal connection of the support body to the relevant crank of the cycle and thereby to the stability of a clamped cycle.

In an advantageous embodiment the clamping device according to the invention is provided with height-adjusting means for height adjustment of the support body so that for any cycle for clamping the support body can be set at a height which results in an optimum stability for the cycle in question.

In an embodiment of the invention the post has a U-shaped cross section and the support body is incorporated in the post.

In preference the post has a U-shaped cross section and the support body is arranged tiltably round a shaft extending through the two legs of this U-shape.

This latter embodiment comprises for instance a wedge-shaped body displaceable in lengthwise direction of the post between the support body and the connecting leg of the U-shape in order to lock the support body against tilting.

The clamping device with U-shaped post comprises in yet another embodiment a releasable coupling element anchorable to the legs of the U-shape for releasable coupling of the crank of a cycle to the support body, which coupling element comprises for instance a rigid bracket provided with screw means or a spring construction for pressing respectively pressing under spring tension onto the support body a cycle crank enclosed by this bracket respectively by this spring construction and this support body.

For height-adjustment of the support body a clamping device with a cross-sectionally U-shaped post according to the invention comprises for instance at least two holes mutually separated at corresponding positions in longitudinal direction in each of both legs of the U-shape for receiving a pin fitting in a corresponding hole in the support body.

In order to enhance optimum stability of a cycle clamped in the clamping device the support body in a vertically placed post is preferably provided on its top with a groove for receiving a crank axle housing, which groove extends transversely of a tilting shaft of the support body and corresponds substantially with the peripheral shape of a crank axle housing of a cycle.

More preferably the support body in a vertically placed post is provided on its standing side remote from this post with at least one groove for receiving a crank, which groove extends transversely of a tilting shaft of the support body and corresponds substantially with the peripheral shape of a cycle crank.

The support body is advantageously manufactured from plastic, for instance polytetrafluoroethylene (PTFE) or polyamide (PA).

A support body manufactured from plastic prevents damage to a cycle clamped in the clamping device, can be produced in inexpensive manner and is durable in use. The danger of damage to a clamped cycle, particularly of the lacquer, the cables and the brake lines thereof, is reduced when the support body is wholly or partially lined with rubber or a thermoplastic elastomer (TPE).

The invention will now be elucidated hereinbelow on the basis of embodiments and with reference to the annexed drawings.

In the drawings:
Fig. 1 shows in perspective view a simplified outline of a removable cycle carrier for an automobile provided with clamping devices according to the invention, Fig. 2a shows in perspective view a first embodiment of a clamping device according to the invention with a U-shaped post, as seen on the closed side of the U-shape,
Fig. 2b shows in perspective view the clamping device of fig. 2a, as seen on the open side of the U-shape,
Fig. 3 shows in perspective view a second embodiment of a clamping device according to the invention with a U-shaped post, as seen on the open side of the U-shape,
Fig. 4 shows a detail of the clamping device of fig. 3 in exploded view,
Fig. 5 shows a detail of the cycle carrier of fig. 1 in perspective view, and
Fig. 6 shows the detail of fig. 5 in the situation where a cycle is placed in the cycle carrier.

Corresponding components will be designated hereinafter with the same reference numerals.

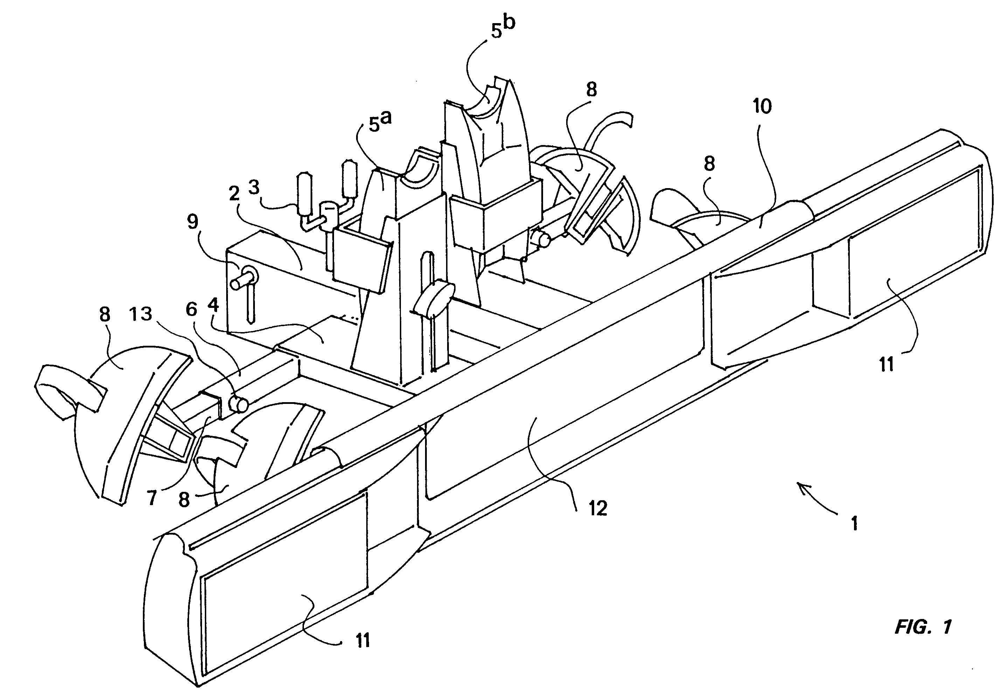

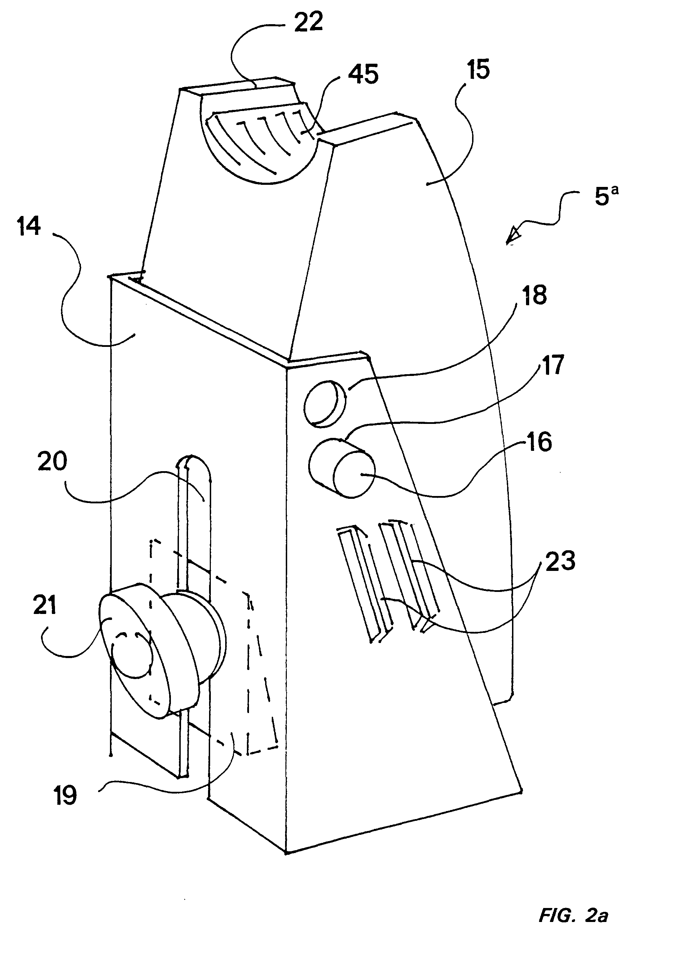

Fig. 1 shows a removable cycle carrier 1 which is formed by a central beam 2, on the rear side of which extends a cross beam (not shown), and a platform 4 for bearing clamping devices 5a, 5b. Extending from platform 4 are hollow side arms 6 into which are pushed adjustable extension pieces 7 which each bear a wheel channel 8 on their free end. Wheel channels 8 are tiltable on a transverse shaft and displaceable over a limited distance parallel to central beam 2. Carrier 1 is further provided with means 3 to couple the carrier on the front part 9 of central beam 2 to the tow hook of an automobile. To the rear of the cross beam is fixed a light fitting 10 into which are integrated the lights 11 required for an automobile and a registration plate 12. A first cycle is fixed transversely of the central beam 2 onto carrier 1 by allowing this cycle to rest with its crank axle housing on the upper part of the front clamping device 5b while the extension pieces 7 are retracted and by subsequently clamping the crank of the cycle directed toward the rear part of carrier 1 into the clamping device 5b. After clamping of the cycle the extension pieces 7 can be extended until the tiltable wheel channels 8 butt against the respective cycle wheels, whereafter extension pieces 7 can be secured in side arms 6 with locking screws 13. Wheel channels 8 impart extra stability to a clamped cycle, which is particularly useful when the automobile is moving and dynamic forces are being exerted on a clamped cycle. When clamping devices 5a, 5b are used in static situations, for instance in a cycle parking area, clamping devices 5a, 5b per se provide a clamped cycle with sufficient stability and the use of wheel channels can be dispensed with.

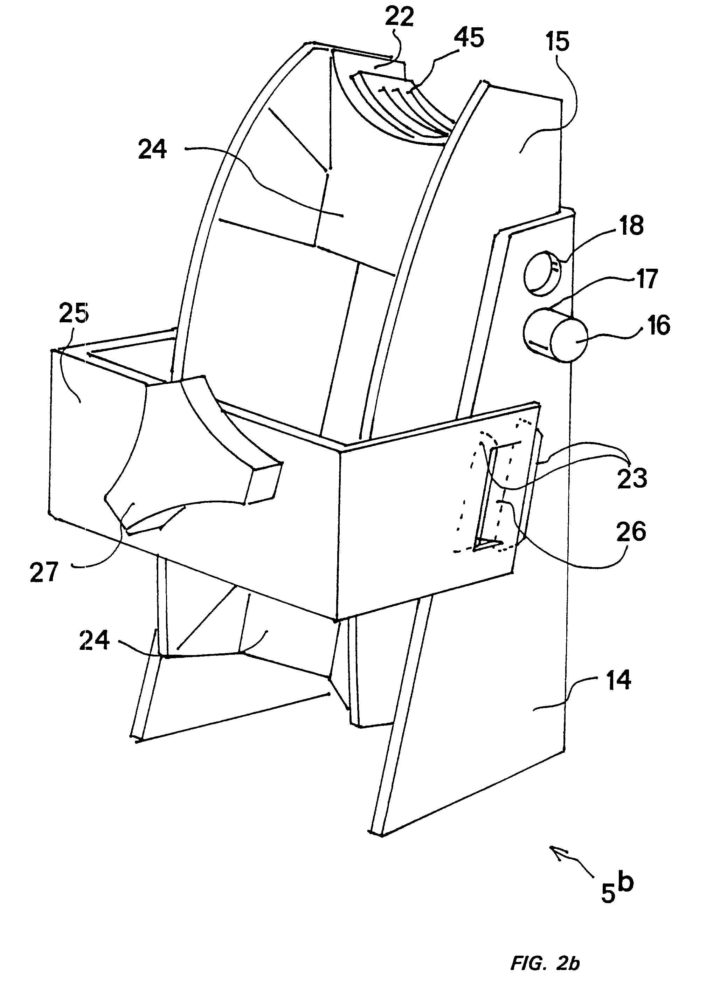

Fig. 2a shows the clamping device 5a of fig. 1 in detail, with a U-shaped post 14 in which a support body 15 is suspended tiltably on a removable shaft 16 which, depending on the desired height of support body 15, extends through one of two pairs of holes 17 or 18 mutually separated in longitudinal direction in the legs of the U-shape. The position of support body 15 relative to post 14 is adjustable within a determined range using a wedge 19 (shown with dashed lines) displaceable in vertical direction between support body 15 and post 14, wherein wedge 19 can be fixed against post 14 using a wing screw 21 which extends through a lengthwise slot 20 in post 14. Support body 15 is provided on its top with a groove 22 extending transversely of the tilting shaft 16 for receiving a crank axle housing of a cycle, wherein the form of groove 22 corresponds with that of such a crank axle housing. In order to prevent damage to the lacquer of the crank axle housing or to the cables or the brake lines, the groove 22 is lined with a cushion 45 of rubber or a thermoplastic elastomer (TPE). The figure further shows a receiving element 23 connected to a leg of the U-shape, the significance of which will be discussed hereinbelow.

Fig. 2b shows the clamping device 5b of fig. 1 in detail. This is identical to clamping device 5a of fig. 2a rotated through an angle of 180° on its longitudinal axis. Shown is how support body 15 is further provided on its side remote from post 14 with grooves 24 extending transversely of the tilting shaft 16 for receiving a cycle crank, wherein the form of grooves 24 corresponds with that of such a crank. A U-shaped bracket 25, the legs of which fall precisely round the U-profile of post 14, rests with receiving elements 26 in the corresponding receiving elements 23 on the legs of the U-profile so that a crank resting against support body 14 in the grooves 24 thereof is enclosed by bracket 25 and support body 15. The coupling between the corresponding receiving elements 23 and 26 can be implemented in different ways, for instance as tiltable coupling, wherein the tilting of bracket 25 is determined by the tilting of support body 15. A crank enclosed in this manner can be fixed using a screw 27 in a hole in bracket 25 provided with screw thread, wherein to prevent damage to the crank the screw 27 presses a non-co-rotating contact plate (not shown) lined for instance with rubber or a TPE onto the crank.

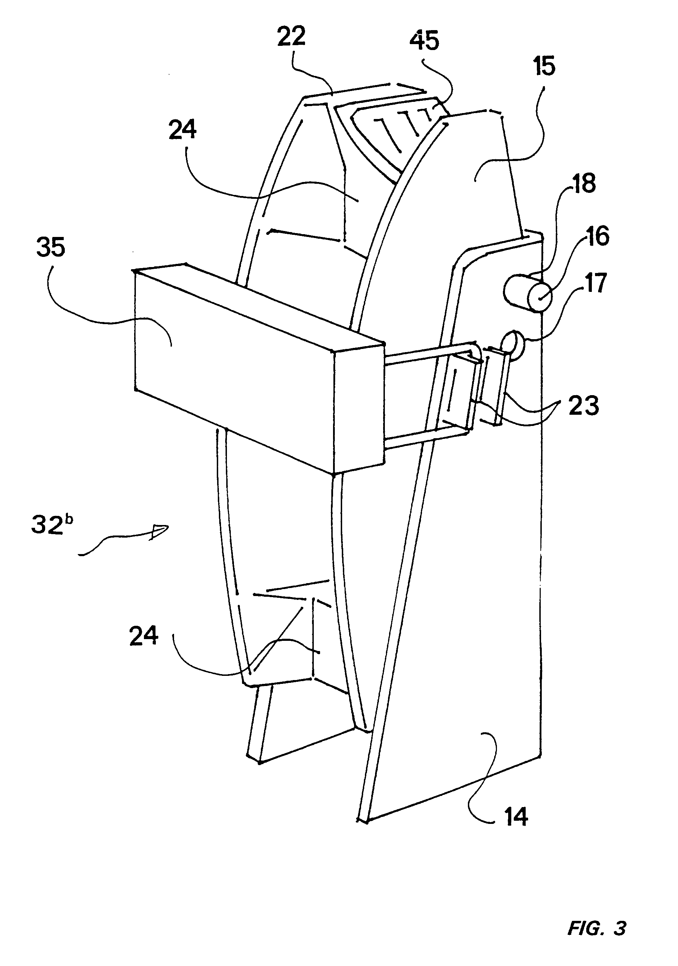

Fig. 3 shows a second embodiment of a clamping device 32b according to the invention with a U-shaped post 14 as seen on the open side of the U-shape. Clamping device 32b differs from clamping device 5b of fig. 2b in the presence of a clamp fastener 35 instead of a U-shaped bracket 25 for fixing of a cycle crank resting in groove 24.

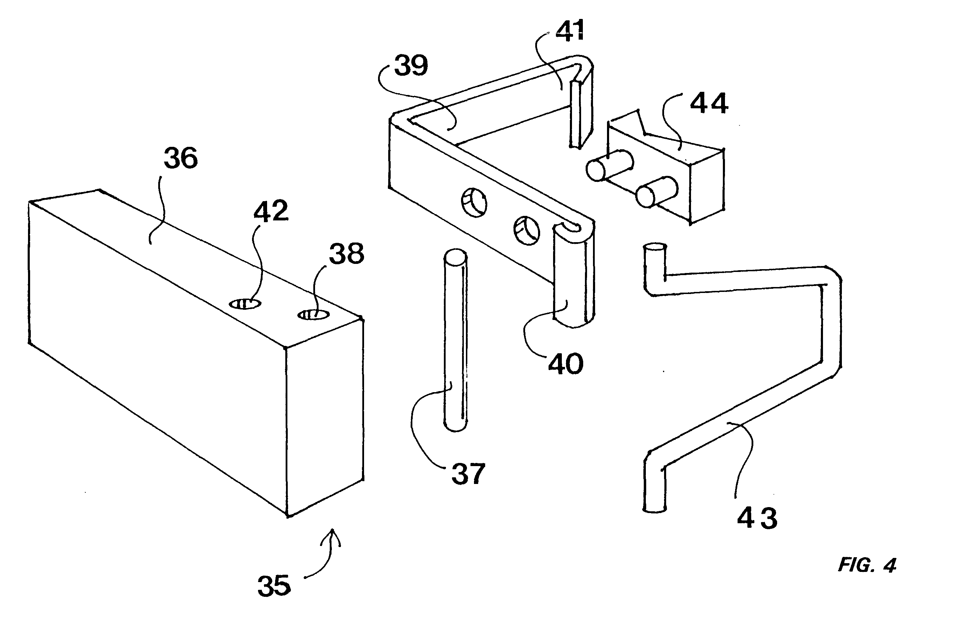

Fig. 4 shows in exploded view the clamp fastener 35 of fig. 3 with cup-shaped button 36 in which is received a shaft 37 which extends through a pair of holes 38. A resilient L-shaped bracket 39 is formed on its one outer end 40 round shaft 37 and is bent on its other outer end 41. Clamp fastener 35 is fixed with its bent end 41 in a slot (not shown) in a side of post 14. A V-shaped bracket 43 is fixed in a second pair of holes 42 in button 36 in a manner such that the end of the V-shape can be pressed round the shaft end 23 on post 14, whereafter a cycle crank enclosed by support body 15 and clamp fastener 35 can be fixed by pressing button 36 onto bracket 39, wherein button 36 rotates on axis 38 and the combination of brackets 39, 43 is tensioned. A plastic block 44 on bracket 39 serves to prevent damage to the cycle crank.

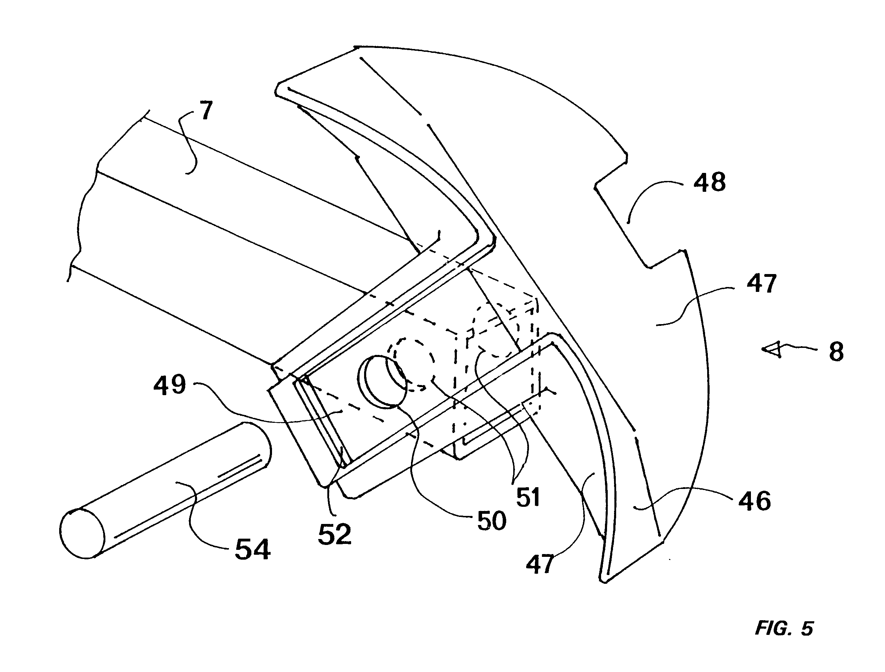

Fig. 5 shows in detail the wheel channel 8 of cycle carrier 1 of fig. 1, with a bottom surface 46 from which stand side surfaces 47. Formed in side surfaces 47 are recesses 48 from which webs 49, which are provided with holes 50, extend downward. An extension piece 7 of a side arm 6 of cycle carrier 1 provided with corresponding holes 51 is arranged between the webs 49, wherein the distance between webs 49 is greater than the width of extension piece 7. The wheel channel can be fixed in per se known manner to the extension piece, for instance with a pin (not shown) through holes 50, 51, wherein the position of wheel channel 8 relative to extension piece 7 can be adjusted, for instance with intermediate rings on the pin. The webs 49 are provided on their underside with slots 52.

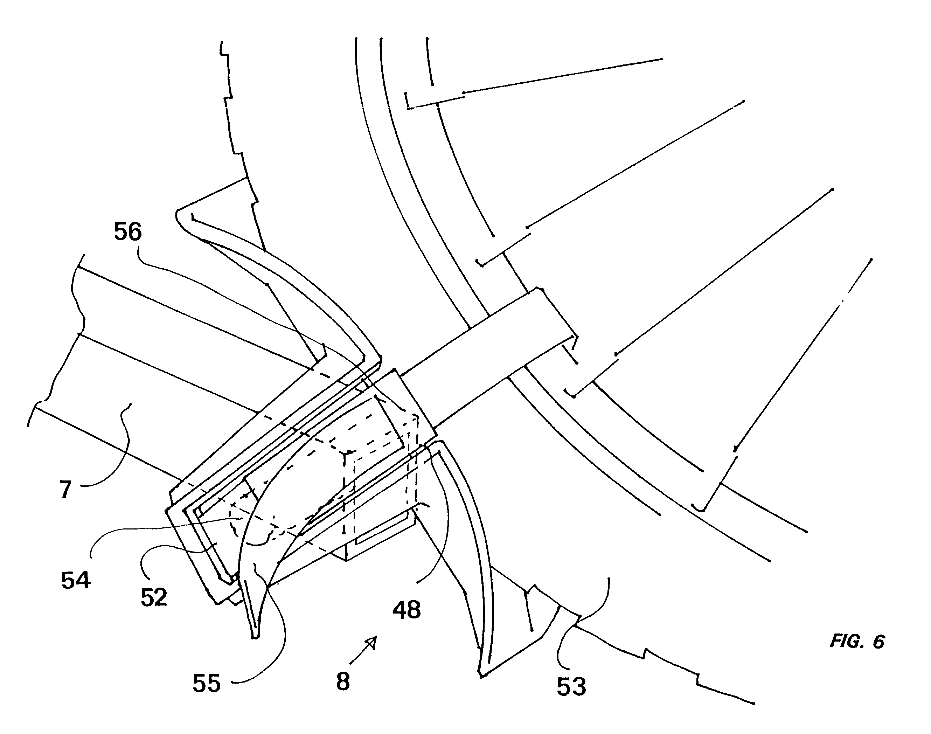

Fig. 6 shows wheel channel 8 of fig. 5, which channel is fixed with a pin 54 to extension piece 7, in the situation where a wheel 53 of a cycle is placed in the channel. Wheel 53 is secured in channel 8 using a strap 55 which is guided through the slots 52 in webs 49 over the wheel 53 via recesses 48 and which is closed with a clasp 56.

## Claims

1. Clamping device (5a, 5b, 32b) for a cycle comprising a vertically placeable post (14) which is provided with clamping. means (15, 25, 35) for clamping a crank of a cycle, **characterized in that** the clamping means comprise a support body (15) for allowing a crank axle housing of a cycle to rest thereon and for allowing a crank of this cycle to support thereagainst, the support body (15) being tiltable relative to the post (14) on a shaft (16) extending transversely of the longitudinal direction of the post (14).

2. Clamping device (5a, 5b, 32b) as claimed in claim 1, **characterized by** locking means (19, 21) for locking the support body (15) against tilting.

3. Clamping device (5a, 5b, 32b) as claimed in any of the claims 1-2, **characterized in that** the clamping means comprise coupling means (25,35) for releasable coupling of the crank of a cycle to the support body (15) .

4. Clamping device as claimed in claim 3, **characterized in that** the coupling means are tiltable relative to the post on a shaft extending transversely of the longitudinal direction of the post.

5. Clamping device (5a, 5b, 32b) as claimed in any of the foregoing claims, **characterized by** height-adjusting means (16, 17, 18) for height adjustment of the support body (15).

6. Clamping device (5a, 5b, 32b) as claimed in any of the foregoing claims, **characterized in that** the post (14) has a U-shaped cross section and the support body (15) is incorporated in the post (14).

7. Clamping device (5a, 5b, 32b) as claimed in claim 6, **characterized in that** the support body (15) is arranged tiltably round a shaft (16) extending through the two legs of this U-shape.

8. Clamping device (5a) as claimed in claim 7, **characterized by** a wedge-shaped body (19) displaceable in lengthwise direction of the post (14) between the support body (15) and the connecting leg of the U-shape in order to lock the support body (15) against tilting.

9. Clamping device (5b, 32b) as claimed in any of the claims 6-8, **characterized by** a releasable coupling element (25, 35) anchorable to the legs of the U-shape for releasable coupling of the crank of a cycle to the support body (15).

10. Clamping device (5b) as claimed in claim 9, **characterized in that** the coupling element comprises a rigid bracket (25) provided with screw means (27) for pressing onto the support body (15) a cycle crank enclosed by this bracket (25) and the support body (15).

11. Clamping device (32b) as claimed in claim 9, **characterized in that** the coupling element comprises a spring construction (35) for pressing onto the support body (15) under spring tension a cycle crank enclosed by this spring construction (35) and the support body (15).

12. Clamping device (5a, 5b, 32b) as claimed in any of the claims 6-11, **characterized by** at least two holes (17, 18) mutually separated at corresponding positions in longitudinal direction in each of both legs of the U-shape for receiving a pin (16) fitting in a corresponding hole (17, 18) in the support body (15) for height adjustment of the support body (15).

13. Clamping device (5a, 5b, 32b) as claimed in any of the foregoing claims, **characterized in that** the support body (15) in a vertically placed post (14) is provided on its top with a groove (22) for receiving a crank axle housing, which groove (22) extends transversely of a tilting shaft (16) of the support body (15) and corresponds substantially with the peripheral shape of a crank axle housing of a cycle.

14. Clamping device (5b, 32b) as claimed in any of the foregoing claims, **characterized in that** the support body (15) in a vertically placed post (14) is provided on its standing side remote from this post (14) with at least a groove (24) for receiving a crank, which groove (24) extends transversely of a tilting shaft (16) of the support body (15) and corresponds substantially with the peripheral shape of a cycle crank.

15. Clamping device (5a, 5b, 32b) as claimed in any of the foregoing claims, **characterized in that** the support body (15) is manufactured from plastic.

16. Clamping device (5a, 5b, 32b) as claimed in claim 15, **characterized in that** the support body (15) is manufactured from polytetrafluoroethylene (PTFE).

17. Clamping device (5a, 5b, 32b) as claimed in claim 15, **characterized in that** the support body (15) is manufactured from polyamide (PA).

## Patentansprüche

1. Klemmvorrichtung (5a, 5b, 32b) für ein Fahrrad, die einen senkrecht zu stellenden Ständer (14) umfasst, der mit Klemmmitteln (15, 25, 35) zum Einklemmen einer Fahrradtretkurbel versehen ist, **dadurch gekennzeichnet, dass** die Klemmmittel eine Stütze (15) umfassen, die ein Achsgehäuse einer Fahrradtretkurbel unterstützt und eine Tretkurbel dieses Fahrrads abstützt, und dass die Stütze (15) an einer Welle (16), die sich quer zur Längsrichtung des Ständers (14) ausstreckt, in Schrägstellung zum Ständer (14) gekippt werden kann.

2. Klemmvorrichtung (5a, 5b, 32b) nach Anspruch 1, **gekennzeichnet durch** Verriegelungsmittel (19, 21) zur Verriegelung der Stütze (15) gegen Kippen.

3. Klemmvorrichtung (5a, 5b, 32b) nach einem der Ansprüchen 1-2, **dadurch gekennzeichnet, dass** die Klemmmittel Kopplungsmittel (25,35) umfassen, mit der die Tretkurbel eines Fahrrads trennbar an die Stütze (15) gekoppelt werden kann.

4. Klemmvorrichtung nach Anspruch 3, **dadurch gekennzeichnet, dass** die Kopplungsmittel an einer Welle, die sich quer zur Längsrichtung des Ständers ausstreckt, in Schrägstellung zum Stände gekippt werden können.

5. Klemmvorrichtung (5a, Sb, 32b) nach einem der obigen Ansprüche, **gekennzeichnet durch** Höheneinstellungsmittel (16, 17, 18) zur Höheneinstellung der Stütze (15).

6. Klemmvorrichtung (5a, 5b, 32b) nach einem der obigen Ansprüche, **dadurch gekennzeichnet, dass** der Ständer (14) einen U-förmigen Querschnitt hat und die Stütze (15) in den Ständer (14) eingebaut ist.

7. Klemmvorrichtung (5a, 5b, 32b) nach Anspruch 6, **dadurch gekennzeichnet, dass** die Stütze (15) so angebracht ist, dass sie um eine Welle (16), die sich durch die zwei Beine dieser U-Form ausstreckt, gekippt werden kann.

8. Klemmvorrichtung (5a) nach Anspruch 7, **gekennzeichnet durch** einen keilförmigen Körper (19), der in Längsrichtung des Ständers (14) zwischen der Stütze (15) und dem Verbindungsbein der U-Form verschiebbar ist, um die Stütze (15) gegen Kippen zu sichern.

9. Klemmvorrichtung (5b, 32b) nach einem der Ansprüchen 6-8, **gekennzeichnet durch** ein trennbares Kopplungselement (25, 35), das zur trennbaren Kopplung der Tretkurbel eines Fahrrads an die Stütze (15) an den Beinen der U-Form befestigt werden kann.

10. Klemmvorrichtung (5b) nach Anspruch 9, **dadurch gekennzeichnet, dass** das Kopplungselement einen starren Träger (25) umfasst, der mit Schraubmitteln (27) versehen ist, um eine von diesem Träger (25) und der Stütze (15) umschlossene Fahrradtretkurbel gegen die Stütze (15) zu drücken.

11. Klemmvorrichtung (32b) nach Anspruch 9, **dadurch gekennzeichnet, dass** das Kopplungselement eine Federkonstruktion (35) umfasst, um eine von dieser Federkonstruktion (35) und der Stütze (15) umschlossene Fahrradtretkurbel unter Federspannung gegen die Stütze (15) zu drücken.

12. Klemmvorrichtung (5a, 5b, 32b) nach einem der Ansprüche 6-11, **gekennzeichnet durch** mindestens zwei Löcher (17, 18), die sich gegenseitig getrennt an übereinstimmenden Stellen in Längsrichtung in jedem der beiden Beine der U-Form befinden, um einen in das übereinstimmende Loch (17, 18) in der Stütze (15) passenden Stift (16) zur Höheneinstellung der Stütze (15) aufzunehmen.

13. Klemmvorrichtung (5a, 5b, 32b) nach einem der obigen Ansprüche, **dadurch gekennzeichnet, dass** die Stütze (15) in einem senkrecht gestellten Ständer (14) an ihrer Spitze mit einer Nut (22) zur Aufnahme eines Achsgehäuses einer Tretkurbel versehen ist, und dass diese Nut (22) sich quer zu einer Kippwelle (16) der Stütze (15) ausstreckt und im Wesentlichen mit der Form des Umfangs eines Achsgehäuses einer Fahrradtretkurbel übereinstimmt.

14. Klemmvorrichtung (5b, 32b) nach einem der obigen Ansprüche, **dadurch gekennzeichnet, dass** die Stütze (15) in einem senkrecht gestellten Ständer (14) an ihrer von diesem Ständer (14) abgewandten Seite mit wenigstens einer Nut (24) zur Aufnahme einer Tretkurbel versehen ist, und dass diese Nut (24) sich quer zu einer Kippwelle (16) der Stütze (15) ausstreckt und im Wesentlichen mit der Form des Umfangs einer Fahrradtretkurbel übereinstimmt.

15. Klemmvorrichtung (5a, 5b, 32b) nach einem der obigen Ansprüche, **dadurch gekennzeichnet, dass** die Stütze (15) aus Kunststoff hergestellt ist.

16. Klemmvorrichtung (5a, 5b, 32b) nach Anspruch 15, **dadurch gekennzeichnet, dass** die Stütze (15) aus Polytetrafluorethylen (PTFE) hergestellt ist.

17. Klemmvorrichtung (5a, 5b, 32b) nach Anspruch 16, **dadurch gekennzeichnet, dass** die Stütze (15) aus Polyamid (PA) hergestellt ist.

## Revendications

1. Dispositif de serrage (5a, 5b, 32b) pour une bicyclette comprenant un montant pouvant être placé verticalement (14) qui est pourvu de moyens de serrage (15, 25, 35) pour serrer un pédalier d'une bicyclette, **caractérisé en ce que** les moyens de serrage comprennent un corps de support (15) pour permettre au boîtier de l'axe du pédalier d'une bicyclette de reposer sur celui-ci et pour permettre au pédalier de cette bicyclette d'être soutenu contre celui-ci, le corps de support (15) pouvant être incliné par rapport au montant (14) sur un arbre (16) s'étendant transversalement à la direction longitudinale du montant (14).

2. Dispositif de serrage (5a, 5b, 32b) conformément à la revendication 1, **caractérisé par** des moyens de blocage (19, 21) servant à bloquer le corps de support (15) pour l'empêcher de s'incliner.

3. Dispositif de serrage (5a, 5b 32b) conformément à l'une quelconque des revendications 1 et 2, **caractérisé en ce que** les moyens de serrage comprennent des moyens d'attache (25, 35) pour attacher de façon détachable le pédalier d'une bicyclette au corps de support (15).

4. Dispositif de serrage conformément à la revendication 3, **caractérisé en ce que** les moyens d'attache peuvent être inclinés par rapport au montant sur un arbre s'étendant transversalement à la direction longitudinale du montant.

5. Dispositif de serrage (5a, 5b, 32b) conformément à l'une quelconque des revendications qui précèdent, **caractérisé par** des moyens de réglage de la hauteur (16, 17, 18) servant à régler la hauteur du corps de support (15).

6. Dispositif de serrage (5a, 5b, 32b) conformément à l'une quelconque des revendications qui précèdent, **caractérisé en ce que** le montant (14) a une section transversale en forme de U et le corps de support (15) est incorporé dans le montant (14).

7. Dispositif de serrage (5a, 5b, 32b) conformément à la revendication 6, **caractérisé en ce que** le corps de support (15) est arrangé de manière à pouvoir être incliné autour d'un arbre (16) s'étendant à travers les deux ailes de cette configuration en U.

8. Dispositif de serrage (5a) conformément à la revendication 7, **caractérisé par** une pièce en coin (19) pouvant être déplacée dans le sens de la longueur du montant (14) entre le corps de support (15) et l'âme de raccordement de la configuration en U afin de bloquer le corps de support (15) pour l'empêcher de s'incliner.

9. Dispositif de serrage (5b, 32b) conformément à l'une quelconque des revendications 6 à 8, **caractérisé par** un élément d'attache détachable (25, 35) pouvant être ancré aux ailes de la configuration en U pour une attache détachable du pédalier d'une bicyclette au corps de support (15).

10. Dispositif de serrage (5b) conformément à la revendication 9, **caractérisé en ce que** l'élément d'attache comprend un collier rigide (25) pourvu de moyens de vis (27) pour presser contre le corps de support (15) un pédalier de bicyclette entouré par ce collier (25) et le corps de support (15).

11. Dispositif de serrage (32b) conformément à la revendication 9, **caractérisé en ce que** l'élément d'attache comprend une structure de ressort (35) pour presser contre le corps de support (15), sous la tension d'un ressort, un pédalier de bicyclette entouré par cette structure de ressort (35) et le corps de support (15).

12. Dispositif de serrage (5a, 5b, 32b) conformément à l'une quelconque des revendications 6 à 11, **caractérisé par** au moins deux trous (17, 18) mutuellement séparés à des positions correspondantes dans la direction longitudinale dans chacune des deux ailes de la configuration en U, destinés à recevoir une broche (16) s'insérant dans un trou correspondant (17, 18) dans le corps de support (15) pour le réglage de la hauteur du corps de support (15).

13. Dispositif de serrage (5a, 5b, 32b) conformément à l'une quelconque des revendications qui précèdent, **caractérisé en ce que** le corps de support (15) dans un montant disposé verticalement (14) est pourvu à son sommet d'une gorge (22) destinée à recevoir un boîtier d'axe de pédalier, ladite gorge (22) s'étendant transversalement à un arbre d'inclinaison (16) du corps de support (15) et correspondant substantiellement à la configuration périphérique d'un boîtier d'axe de pédalier d'une bicyclette.

14. Dispositif de serrage (5b, 32b) conformément à l'une quelconque des revendications qui précèdent, **caractérisé en ce que** le corps de support (15) dans un montant disposé verticalement (14) est pourvu, sur son côté dressé éloigné de ce montant (14), d'au moins une gorge (24) destinée à recevoir un pédalier, ladite gorge s'étendant transversalement à un arbre d'inclinaison (16) du corps de support (15) et correspondant substantiellement à la configuration périphérique d'un pédalier de bicyclette.

15. Dispositif de serrage (5a, 5b, 32b) conformément à l'une quelconque des revendications qui précèdent, **caractérisé en ce que** le corps de support (15) est fabriqué en plastique.

16. Dispositif de serrage (5a, 5b, 32b) conformément à la revendication 15, **caractérisé en ce que** le corps de support (15) est fabriqué en polytétrafluoréthylène (PTFE).

17. Dispositif de serrage (5a, 5b, 32b) conformément à la revendication 15, **caractérisé en ce que** le corps de support (15) est fabriqué à partir en polyamide (PA).
